# EUROPÄISCHE PATENTANMELDUNG

(11) **EP 4 047 257 A1**
(43) Veröffentlichungstag der Anmeldung: **24.08.2022**
(21) Anmeldenummer: 21158512.0
(22) Anmeldetag: 22.02.2021
(51) Int. Cl.: F16P 3/14

(54) **ÜBERWACHUNGSEINRICHTUNG UND VERFAHREN ZUM BETRIEB EINER ÜBERWACHUNGSEINRICHTUNG**

(71) Anmelder: Leuze electronic GmbH + Co. KG, 73277 Owen/Teck (DE)
(72) Erfinder: Mielchen, Alexander, 72768 Reutlingen (DE); Brunner, Rolf, 82223 Eichenau (DE)
(74) Vertreter: Ruckh, Rainer Gerhard

(57) **Zusammenfassung**

Die Erfindung betrifft eine Überwachungseinrichtung (100) mit einem Sicherheitssensor (102), mittels dessen ein Überwachungsbereich (103) an einer Anlage (101) überwacht wird. Mittels des Sicherheitssensors (102) werden die Bewegungsrichtung und/oder Geschwindigkeit eines in den Überwachungsbereich (103) eindringenden Objekts erfasst und abhängig hiervon Ausgangssignale generiert, mittels derer die Anlage (101) gesteuert wird. Die Erfindung betrifft weiterhin ein entsprechendes Verfahren.

## Beschreibung

Die Erfindung betrifft eine Überwachungseinrichtung und ein Verfahren zum Betrieb einer Überwachungseinrichtung.

Derartige Überwachungseinrichtungen können zur Sicherung von Gefahrenbereichen an Anlagen vorgesehen sein, wobei dort ein Gefahrenbereich, in welchem von der Anlage gefahrbringende Bewegungen ausgeführt werden, abzusichern ist.

Derartige Anlagen können von stationären Maschinen gebildet sein.

Weiterhin können derartige Überwachungseinrichtungen zur Sicherung des Vorfelds an Fahrzeugen eingesetzt werden, um einen Kollisionsschutz für das Fahrzeug zu realisieren.

In beiden Fällen ist es bekannt, Sensoren, insbesondere distanzmessende optische Sensoren zur Überwachung von Gefahrenbereichen einzusetzen, wobei diese beispielsweise als Flächendistanzsensor, das heißt als scannende Distanzsensoren, ausgebildet sein können.

Zur Anpassung an verschiedene beziehungsweise sich ändernde Gefahrenbereiche ist es bekannt, dass im optischen Sensor unterschiedliche Schutzfelder gespeichert sind. Je nach Gefahrensituation wird im optischen Sensor ein Schutzfeld aktiviert, so dass innerhalb dieses vorgegebenen Schutzfelds eine Objektüberwachung erfolgt.

Im optischen Sensor wird dann abhängig davon, ob im vorgegebenen Schutzfeld ein Objekt detektiert wird, ein binäres Schaltsignal mit einem entsprechenden Schaltzustand erzeugt. Nimmt das Schaltsignal bei einer Objektdetektion den Schaltzustand "Objekt vorhanden" ein, wird eine Sicherheitsfunktion ausgelöst, wodurch ein sicherer Betriebszustand herbeigeführt wird, der Gefährdungen von Personen vermeidet. Bei der Überwachung einer gefahrbringenden stationären Maschine kann die Sicherheitsfunktion darin bestehen, die Maschine stillzusetzen. Bei der Überwachung eines Fahrzeugs kann die Sicherheitsfunktion darin bestehen, das Fahrzeug anzuhalten.

Nachteilig bei derartigen Überwachungseinrichtungen ist, dass stets nur eine begrenzte Anzahl von Schutzfeldern abgespeichert werden kann, wodurch eine Anpassung der Überwachungseinrichtung an sich verändernde Randbedingungen nur eingeschränkt möglich ist.

Um die Überwachungseinrichtung an eine neue Applikation anzupassen, ist es typischerweise erforderlich, dass die einzelnen Schutzfelder umkonfiguriert werden müssen, was zeitaufwändig und umständlich ist.

Ein weiterer Nachteil derartiger Überwachungseinrichtungen besteht darin, dass bei jedem Objekteingriff im Schutzfeld die Sicherheitsfunktion ausgelöst wird. Hierbei bleibt unberücksichtigt, ob das Objekt tatsächlich eine Gefährdung verursacht. Da somit auch bei nicht gefahrbringenden Objekteingriffen die Sicherheitsfunktion ausgelöst und die Anlage stillgesetzt wird, wird deren Verfügbarkeit unnötig eingeschränkt.

Der Erfindung liegt die Aufgabe zugrunde eine Überwachungseinrichtung der eingangs genannten Art bereitzustellen, mittels derer eine verbesserte Überwachungsfunktion bereitgestellt wird.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Überwachungseinrichtung mit einem Sicherheitssensor, mittels dessen ein Überwachungsbereich an einer Anlage überwacht wird. Mit dem Sicherheitssensor werden die Bewegungsrichtung und/oder Geschwindigkeit eines in den Überwachungsbereich eindringenden Objekts erfasst und abhängig hiervon Ausgangssignale generiert, mittels derer die Anlage gesteuert wird.

Die Erfindung betrifft weiterhin ein entsprechendes Verfahren.

Ein wesentlicher Vorteil der Erfindung besteht darin, dass mit dem Sicherheitssensor nur noch ein fest vorgegebener, insbesondere ein von einem Benutzer konfigurierbarer Überwachungsbereich überwacht werden muss, um eine Gefahrenbereichsüberwachung an einer Anlage durchzuführen.

Die Anlage kann dabei generell eine stationäre Maschine, eine bewegliche Maschine wie ein Roboter oder auch ein Fahrzeug sein.

Dies wird erfindungsgemäß dadurch erreicht, dass mit dem Sicherheitssensor, das heißt anhand der vom Sicherheitssensor generierten Sensorsignale nicht nur die An- oder Abwesenheit von Objekten festgestellt wird. Vielmehr werden mit dem Sicherheitssensor Bewegungsrichtungen und Geschwindigkeiten von Objekten im Überwachungsbereich erfasst. Anhand der so bestimmten Bewegungsrichtungen und Geschwindigkeiten kann beurteilt werden, wie hoch das von einem Objekt ausgehende Gefährdungspotential ist. Abhängig hiervon können exakt abgestimmte Ausgangssignale generiert werden, mit denen die von der Überwachungseinrichtung überwachte Anlage gesteuert wird. Da die Ausgangssignale genau auf das Gefährdungspotential der Objekte abgestimmt sind, wird auch bei sich ändernden Randbedingungen ein sicherer Schutz der Anlage gewährleistet ohne deren Verfügbarkeit unnötig einzuschränken.

Ein aufwändiges Speichern und Auswählen von Schutzfeldern ist somit nicht mehr erforderlich. Insbesondere entfällt auch der Aufwand zur Konfiguration einer Vielzahl von Schutzfeldern.

Vorteilhaft werden abhängig von den mit dem Sicherheitssensor durchgeführten Objektdetektionen sichere und/oder nichtsichere Ausgangssignale ausgegeben.

Insbesondere wird mittels der sicheren Ausgangssignale eine Sicherheitsfunktion für die Anlage ausgelöst.

Weiterhin wird mittels der nichtsicheren Ausgangssignale eine Steuerungsfunktion für die Anlage ausgelöst.

Vorteilhaft werden die Ausgangssignale an eine die Anlage steuernde Steuereinheit ausgegeben.

Eine Sicherheitsfunktion kann insbesondere darin bestehen, die Anlage in einen sicheren Zustand zu überführen, so dass von dieser keine Gefahren mehr ausgehen können. Insbesondere kann mit der Sicherheitsfunktion die Anlage stillgesetzt werden.

Eine durch ein nicht sicheres Ausgangssignal bewirkte Steuerungsfunktion kann beispielsweise Bewegungen der Anlage oder von Anlagenteilen freigeben, deren Zeitabläufe und/oder derer Bewegungsabläufe so abgestimmt sind, dass von der Anlage keine Gefahrensituationen ausgehen.

Beispielsweise kann eine Sicherheitsfunktion dann ausgelöst werden, wenn sich ein Objekt, insbesondere eine Person bis auf einen einzuhaltenden Mindestabstand der Anlage genähert hat.

Ein wesentlicher Vorteil der erfindungsgemäßen Überwachungseinrichtung besteht dabei darin, dass dieser einzuhaltende Mindestabstand an die tatsächliche Geschwindigkeit des Objekts, insbesondere einer Person, angepasst sein kann. Die Anpassung des Mindestabstands an die tatsächliche Geschwindigkeit wird auch "speed and separation monitoring" genannt und ist in der Norm ISO 15066 beschrieben.

Dies stellt einen wesentlichen Vorteil gegenüber bekannten Schutzfeldüberwachungen dar, wo die Dimension des Schutzfelds an die Maximalgeschwindigkeit einer Person angepasst sein muss, da dort jeglicher Objekteingriff im Schutzfeld zur Auslösung der Sicherheitsfunktion führt.

Dieser Vorteil ist insbesondere bei Überwachungen von Roboterapplikationen vorteilhaft, da hier die Bewegungsfreiheit und damit die Verfügbarkeit durch die Vorfeldüberwachung des Roboters nicht unnötig eingeschränkt wird. Gleiches gilt natürlich von Anlagen, die gefahrbringende Bewegungen ausführen oder für autonom fahrende Fahrzeuge.

Da mit der erfindungsgemäßen Überwachungseinrichtung als Kriterium für die Auslösung einer Sicherheitsfunktion der an die tatsächliche Objektgeschwindigkeit angepasste Mindestabstand überwacht wird, kann nach einem Stillstand der Anlag durch Auslösen der Sicherheitsfunktion ein Wiederanlauf der Anlage erheblich schneller erfolgen als bei einer Schutzfeldüberwachung bei der das Schutzfeld an die Maximalgeschwindigkeit des Objekts angepasst ist. Auch dadurch wird die Verfügbarkeit der Anlage erhöht.

Ein nichtsicheres Ausgangssignal und eine dadurch ausgelöste Steuerungsfunktion dient insbesondere zur Freigabe nicht gefahrbringender Bewegungen, beispielsweise dem Transport von Werkstücken oder sonstigen Transportgütern zu der überwachten Anlage. Diese nicht gefahrbringenden Objekte können anhand der Sensorsignale des Sicherheitssensors von gefahrbringenden Objekten, insbesondere Personen, sicher unterschieden werden.

Generell wird die Auswertung von Sensorsignalen in einer im Sicherheitssensor integrierten Auswerteeinheit oder in einer externen Rechnereinheit durchgeführt.

Dementsprechend weist der Sicherheitssensor und/oder die Rechnereinheit als weitere Bestandteile der Überwachungseinrichtung geeignete Ausgangsstrukturen, insbesondere digitale oder analoge Ausgänge zur Ausgabe der Ausgangssignale auf.

Vorteilhaft werden sichere Ausgangssignale mittels sicherer Protokolle und/oder über fehlersichere Ausgangsstrukturen ausgegeben.

Die sicheren Ausgangsstrukturen können von zweikanaligen, fehlersicheren Ausgängen gebildet sein. Sichere Protokolle werden durch Maßnahmen zur Fehlererkennung, insbesondere durch Prüfsummen realisiert.

Nichtsichere Ausgangsstrukturen können von einkanaligen Ausgängen gebildet sein.

Vorteilhaft können die sicheren und nichtsicheren Ausgangssignale konfigurierbar sein.

Damit kann der Benutzer die zu generierenden sicheren beziehungsweise nichtsicheren Ausgangssignale nach Bedarf vorgeben.

Gemäß einer vorteilhaften Ausgestaltung werden anhand von Sensorsignalen des Sicherheitssensors Bewegungsvektoren von Objekten im Überwachungsbereich bestimmt.

Diese Bewegungsvektoren werden einzeln für jedes im Überwachungsbereich vorhandenes Objekt gebildet, wodurch für jedes Objekt dessen Bewegung im Überwachungsbereich exakt verfolgt wird. Abhängig von diesen Bewegungsvektoren werden dann sichere oder nichtsichere Ausgangssignale generiert. Gemäß einer besonders vorteilhaften Ausführungsform werden anhand von Sensorsignalen des Sicherheitssensors Bewegungsprofile von Objekten im Überwachungsbereich bestimmt.

Dabei ist es möglich, dass anhand von Bewegungsprofilen eine Klassifizierung von Objekten durchgeführt wird, und dass anhand der Klassifizierung Personen von anderen Objekten unterschieden werden.

Beispielsweise können Personen von anderen Objekten wie Fahrzeuge oder auf Förderbändern transportierten Transportgütern dadurch unterschieden werden, dass sich die Beine von Personen mit unterschiedlichen, wechselnden Geschwindigkeiten bewegen, wogegen sich Fahrzeuge oder Transportgüter auf Förderbänder gleichförmig bewegen.

Weiterhin ist es möglich, dass anhand von mittels Sensorsignalen des Sicherheitssensors bestimmten Konturen, Objektmustern und/oder Objekthelligkeiten von Objekten eine Klassifikation von Objekten durchgeführt wird.

Vorteilhaft werden die Ausgangssignale abhängig von Klassifikationen von Objekten generiert.

Wird beispielsweise eine Person erkannt, wird diese als gefahrbringendes Objekt derart eingestuft, dass diese beim Eindringen in den Überwachungsbereich, insbesondere bei Annähern auf einen Mindestabstand ein Auslösen einer Sicherheitsfunktion durch Ausgabe eines sicheren Ausgangssignals bewirkt.

Wird dagegen ein Objekt als nicht gefahrbringendes Objekt klassifiziert, das zum Beispiel von einem Fahrzeug oder einem Transportgut gebildet ist, so wird ein nichtsicheres Ausgangssignal generiert, das zur Auslösung einer Steuerungsfunktion führt, beispielsweise derart, dass von der Anlage das Transportgut übernommen wird, oder das Fahrzeug eine Schleuse oder dergleichen passieren kann. Gemäß einer vorteilhaften Ausgestaltung werden die Ausgangssignale abhängig von den Bewegungen eines Objekts relativ zur Position wenigstens einer Gefahrenstelle im Überwachungsbereich generiert.

Zweckmäßig ist die Position der Gefahrenstelle konfigurierbar.

Durch die Vorgabe der Position einer oder mehrerer Gefahrenstellen kann die Funktion der Überwachungseinrichtung mit anwenderspezifischen Informationen verknüpft werden. Diese können von einem Benutzer flexibel vorgegeben werden.

Gemäß einer vorteilhaften Ausgestaltung ist der Sicherheitssensor ein optischer Sensor, ein Radarsensor oder ein Ultraschallsensor.

Insbesondere ist der Sicherheitssensor ein Flächendistanzsensor oder ein Kamerasensor.

Prinzipiell kann die Überwachungseinrichtung auch mehrere, insbesondere verschiedene Sicherheitssensoren aufweisen.

Die Erfindung wird im Folgenden anhand der Zeichnungen erläutert. Es zeigen:
- Figur 1a:: Blockschaltbild eines Ausführungsbeispiels der erfindungsgemäßen Überwachungseinrichtung.
- Figur 1b:: Schematische Darstellung der Überwachungseinrichtung gemäß Figur 1a.
- Figur 2:: Erstes Ausführungsbeispiel eines Sicherheitssensors für die Überwachungseinrichtung gemäß den Figuren 1a und 1b.
- Figur 3:: Zweites Ausführungsbeispiel eines Sicherheitssensors für die Überwachungseinrichtung gemäß den Figuren 1a und 1b.
- Figur 4:: Drittes Ausführungsbeispiel eines Sicherheitssensors für die Überwachungseinrichtung gemäß den Figuren 1a und 1b.
- Figur 5:: Erstes Ausführungsbeispiel einer Objektüberwachung bei der Überwachungseinrichtung gemäß den Figuren 1a und 1b.
- Figur 6:: Zweites Ausführungsbeispiel einer Objektüberwachung bei der Überwachungseinrichtung gemäß den Figuren 1a und 1b.
- Figur 7:: Drittes Ausführungsbeispiel einer Objektüberwachung bei der Überwachungseinrichtung gemäß den Figuren 1a und 1b.

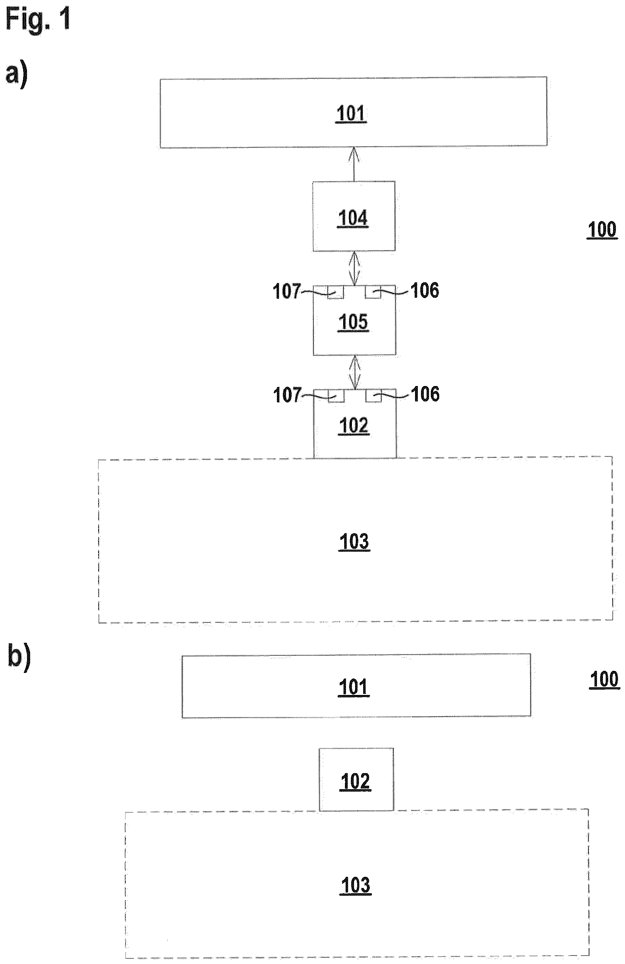

Die Figuren 1a und 1b zeigen schematisch den Aufbau eines Ausführungsbeispiels der erfindungsgemäßen Überwachungseinrichtung 100. Die Überwachungseinrichtung 100 dient zur Gefahrenbereichsabsicherung an einer Anlage 101. Die Anlage 101 ist im vorliegenden Fall eine stationäre Maschine. Generell kann die Anlage 101 auch von einem Roboter, einem autonom fahrenden Fahrzeug oder dergleichen gebildet sein.

Die Überwachungseinrichtung 100 umfasst einen Sicherheitssensor 102 mit dem erfindungsgemäß nur ein Überwachungsbereich 103 überwacht wird, der durch einen Anwender konfiguriert werden kann.

Zur Durchführung von Objektüberwachungen im Überwachungsbereich 103 werden Sensorsignale des Sicherheitssensors 102 ausgewertet, wobei die Auswertung derart erfolgt, dass Bewegungsrichtungen und/oder Geschwindigkeiten von Objekten im Überwachungsbereich 103 bestimmt werden. Abhängig von dieser Auswertung werden Ausgangssignale generiert, mit denen die Anlage 101 gesteuert wird.

Im einfachsten Fall erfolgt die Auswertung im Sicherheitssensor 102 selbst. Die Ausgangssignale können dann über eine Ausgangsstruktur des Sicherheitssensors 102 direkt an eine Steuereinheit 104 ausgegeben werden, die die Anlage 101 steuert.

Im vorliegenden Fall erfolgt die Auswertung in einer Rechnereinheit 105, die die Ausgangssignale über eine Ausgangsstruktur an die Steuereinheit 104 ausgibt.

Im vorliegenden Fall umfasst die Ausgangsstruktur der Rechnereinheit 105 beziehungsweise des Sicherheitssensors 102 einen zweikanaligen, fehlersicheren Ausgang 106, über welchen sichere Ausgangssignale mittels sicherer Protokolle ausgegeben werden. Die Fehlersicherheit der sicheren Protokolle wird durch Prüfsummen oder dergleichen erzielt. Weiterhin umfasst die Ausgangsstruktur einen einkanaligen nicht fehlersicheren Ausgang 107 zur Ausgabe von nichtsicheren Ausgangssignalen. Generell können auch Mehrfachanordnungen derartiger Ausgänge vorgesehen sein.

Ein Anwender kann die sicheren und nichtsicheren Ausgangssignale konfigurieren.

Mit den sicheren Ausgangssignalen wird insbesondere eine Steuerungsfunktion für die Anlage 101 ausgelöst. Insbesondere kann die Sicherheitsfunktion darin bestehen, dass die Anlage 101 stillgesetzt wird.

Mit den nichtsicheren Ausgangssignalen kann insbesondere eine Steuerungsfunktion, insbesondere zur Durchführung nicht gefahrbringender Arbeitsprozesse ausgelöst werden. Auch können mit den nichtsicheren Ausgangssignalen Warnmeldungen generiert werden.

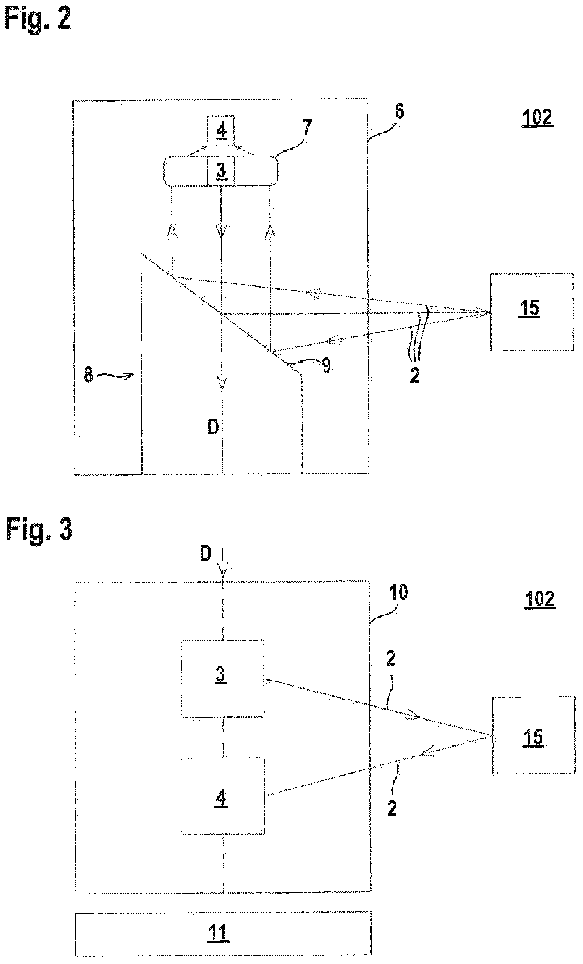

Die Figuren 2 bis 4 zeigen Ausführungsbeispiele von Sicherheitssensoren 102 in Form von distanzmessenden optischen Sensoren, wobei die Distanzmessungen vorteilhaft nach einem Impuls-Laufzeitverfahren oder einem Phasenmessverfahren erfolgen.

Figur 2 zeigt ein Ausführungsbeispiel eines optischen Sensors in Form eines Flächendistanzsensors, das heißt eines scannenden Distanzsensors. Zur Durchführung von Distanzmessungen weist der optische Sensor einen Lichtstrahlen 2 emittierenden Sender 3 und einen Lichtstrahlen 2 empfangenden Empfänger 4 auf. Der Sender 3 emittiert Lichtstrahlen 2 in Form von Lichtimpulsen. Wie Figur 2 zeigt, werden die Lichtstrahlen 2 an einem zu detektierenden Gegenstand 15 reflektiert, wobei die entsprechende Lichtlaufzeit der Lichtimpulse zum Gegenstand 15 und zurück zum optischen Sensor für die Distanzbestimmungen ausgewertet werden.

Wie Figur 2 zeigt, sind die Sensorkomponenten der optischen Sensoren in einem Gehäuse 6 integriert, wobei der Sender 3 sowie der Empfänger 4 mit einer vorgeordneten Sendeoptik beziehungsweise Empfangsoptik 7 stationär im Gehäuse 6 angeordnet sind. Mit dem optischen Sensor erfolgt eine Objektdetektion in einem flächigen Erfassungsbereich dadurch, dass die Lichtstrahlen 2 mittels einer Ablenkeinheit 8 periodisch abgelenkt werden. Die Ablenkeinheit 8 ist motorisch angetrieben und umfasst einen um eine Drehachse D drehbaren Winkelspiegel 9, an dem die Lichtstrahlen 2 abgelenkt werden.

Figur 3 zeigt eine Variante des Flächendistanzsensors gemäß Figur 1. In diesem Fall erfolgt die periodische Ablenkung der Lichtstrahlen 2 dadurch, dass der Sender 3 und der Empfänger 4 in einem um eine Drehachse D drehbaren Messkopf 10 angeordnet sind, wobei der Messkopf 10 auf einem Sockel 11 drehbar gelagert ist.

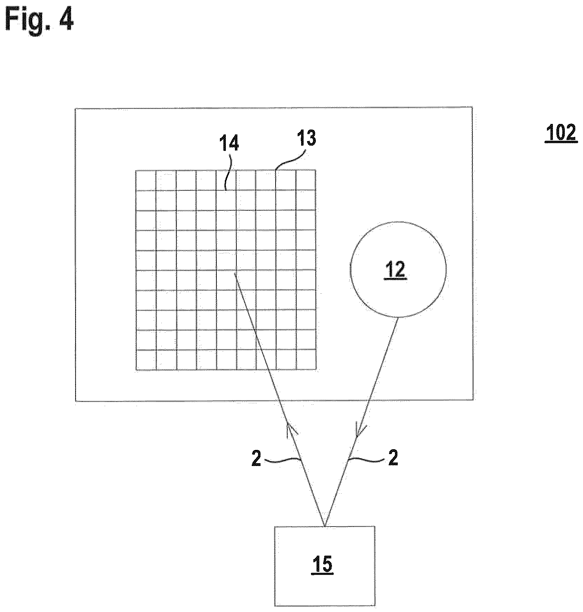

Figur 4 zeigt die Sensorkomponenten eines als Kamerasensor ausgebildeten Sicherheitssensors 102. Dieser Sicherheitssensor 102 weist eine Lichtstrahlen 2 emittierende Beleuchtungseinheit 12 und als Empfänger 4 einen Bildsensor 13 auf, der in Form eines CCD- oder CMOS-Arrays mit einer matrixförmigen Anordnung von Empfangselementen 14 ausgebildet sein kann.

Generell weist jeder Sicherheitssensor 102 eine nicht dargestellte Auswerteeinheit auf, in der die Empfangssignale des Empfängers 4 ausgewertet werden können.

Für den Einsatz im Bereich der Sicherheitstechnik sind die optische Sensoren gemäß den Figuren 2 bis 4 als Sicherheitssensoren 102 ausgebildet und weisen einen fehlersicheren Aufbau auf, der beispielsweise durch eine redundante Auswerteeinheit in Form zweier sich zyklisch gegenseitig überwachender Prozessoren realisiert werden kann.

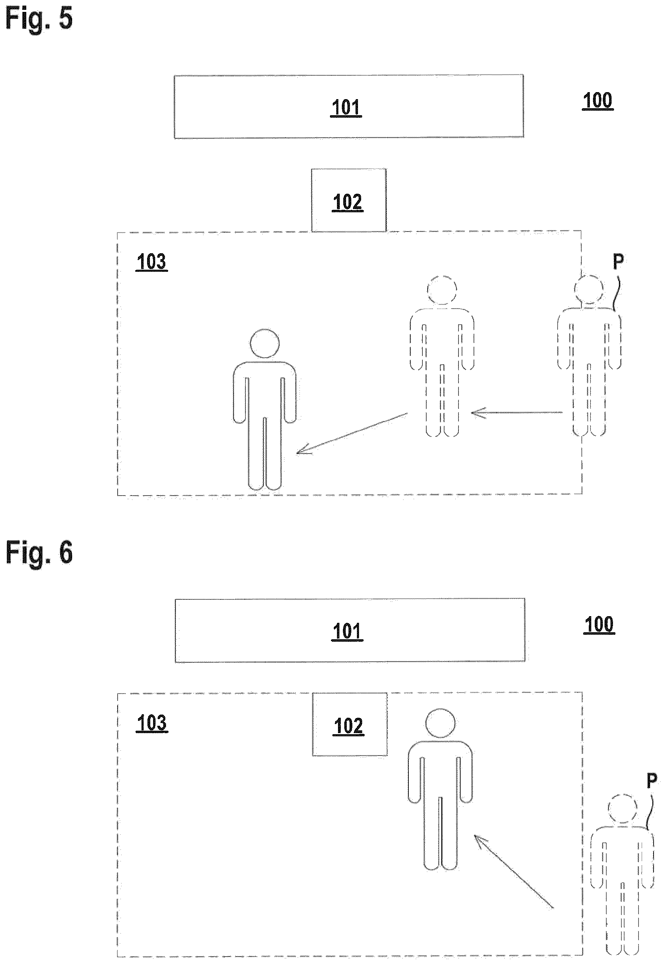

Die Figuren 5 bis 7 zeigen Beispiele von Objekterkennungen im Überwachungsbereich 103, die mit dem Sicherheitssensor 102 durchgeführt werden, um die Anlage 101 abzusichern.

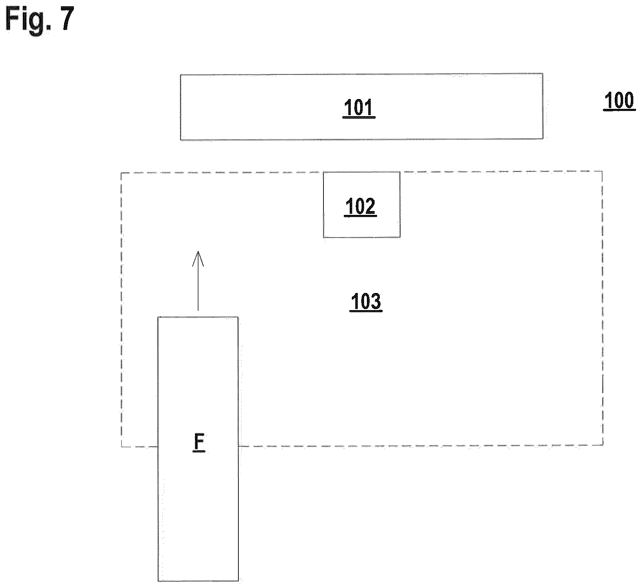

Bei den in den Figuren 5 und 6 dargestellten Fällen dringt eine Person P in den Überwachungsbereich 103 ein. Bei dem in Figur 7 dargestellten Fall dringt ein Fahrzeug in Form eines fahrerlosen Transportsystems F in den Überwachungsbereich 103 ein. Anhand der Sensorsignale des Sicherheitssensors 102 wird in der Auswerteeinheit des Sicherheitssensors 102 selbst oder in der Rechnereinheit 105 die Bewegungsrichtung und Geschwindigkeit der Person P bestimmt. Insbesondere wird, wie mit den Pfeilen veranschaulicht, der Bewegungsvektor der Person P bestimmt.

Weiterhin erfolgt anhand der Sensorsignale eine Bestimmung von Bewegungsprofilen von Objekten im Überwachungsbereich 103 und abhängig davon eine Klassifizierung von Objekten. Durch diese Klassifizierung können insbesondere Personen P von anderen Objekten unterschieden werden. Alternativ oder zusätzlich kann anhand von mittels Sensorsignalen des Sicherheitssensors 102 bestimmten Konturen, Objektmustern und/oder Objekthelligkeiten von Objekten eine Klassifikation von Objekten durchgeführt werden.

Der Sicherheitssensor 102 ist vorteilhaft dicht über dem Boden einer Halle oder dergleichen installiert, wobei ein Sicherheitssensor 102 nach Figur 7 auch über der Maschine installiert sein kann.

Dadurch detektiert der Sicherheitssensor 102 im Wesentlichen nur Beine von Personen P. Die Beine einer Person P sind durch eine minimale und maximale Breite definierbar. Eine minimale Breite ist zum Beispiel 50 Millimeter, während ein guter Wert für eine maximale Breite aufgrund der Kleidung 250 bis 300 Millimeter beträgt. Eine Palette oder Kiste ist meist breiter, so dass so eine einfache Klassifizierung erfolgen kann. Zusätzlich kann beispielsweise eine Gitterbox durch mehrere kleine Objekte, die im gleichen Abstand nebeneinanderstehen, erkannt werden. Das Bewegungsprofil von menschlichen Beinen und einem fahrerlosen Transportsystem F wie in Figur 7 dargestellt sind generell sehr unterschiedlich. Ein fahrerloses Transportsystem F bewegt sich gleichförmig, das heißt die Geschwindigkeit ist zu jedem Zeitpunkt immer gleich oder verändert sich langsam. Beim Gehen haben die Beine einer Person P zeitabhängig unterschiedliche Geschwindigkeiten, so dass diese Bewegung nicht gleichförmig ist, aber ebenfalls einem bestimmten Muster folgt. Phasen mit langsamer Bewegung (Bein steht auf dem Boden) und Phasen mit schneller Bewegung (Bein macht einen Schritt) wechseln sich zyklisch ab. Die Konturen von einem fahrerlosen Transportsystem F können beispielsweise mit einem bestimmten Muster (hell/dunkel, abwechselnde Bereiche) oder einer gleichmäßig hellen Oberfläche versehen werden. Beispielsweise können fahrerlose Transportsysteme F mit einer Reflektorfolie beklebt werden, die nicht als Kleidung vorkommen. Wertet man das Muster oder die Helligkeit der detektierten Objekte aus, kann man diese als Person P oder ein anderes Objekt klassifizieren.

Durch diese Klassifikationen können gefahrbringende Objekte, insbesondere Personen P, von nicht gefahrbringenden Objekten, wie das in Figur 7 dargestellte fahrerlose Transportsystem F, unterschieden werden. Abhängig von diesen Klassifikationen werden sichere oder nichtsichere Ausgangssignale generiert, mit denen die Anlage 101 gesteuert wird.

Bei dem in Figur 5 dargestellten Fall dringt zwar eine Person P in den Überwachungsbereich 103 ein, nähert sich jedoch der Anlage 101 nicht weiter, wobei der Abstand der Person P zur Anlage 101 immer größer als ein vorgegebener Mindestabstand ist. Zudem zeigt der Bewegungsvektor, dass sich die Person P wieder von der Anlage 101 wegbewegt. Diese Situation wird im Sicherheitssensor 102 oder in der Rechnereinheit 105 als nicht gefahrbringend beurteilt, so dass keine Sicherheitsfunktion für die Anlage 101 ausgelöst wird, das heißt der Betrieb der Anlage 101 wird aufrecht erhalten. Der Sicherheitssensor 102 oder die Rechnereinheit 105 generiert in diesem Fall lediglich eine optische oder akustische Warnmeldung, die die Person P davon abhält, sich der Anlage 101 noch weiter zu nähern.

Bei dem in Figur 6 dargestellten Fall bewegt sich die Person P auf die Anlage 101 zu und unterschreitet einen Mindestabstand. Dies wird als Gefahrensituation beurteilt, so dass durch die im Sicherheitssensor 102 oder in der Rechnereinheit 105 generierten sicheren Ausgangssignale eine Sicherheitsfunktion ausgelöst wird, insbesondere die Anlage 101 stillgesetzt wird.

Diese Bewegungsanalyse kann insbesondere dadurch noch verfeinert werden, dass ein Anwender die Position von Gefahrenstellen im Überwachungsbereich 103 konfiguriert, das heißt vorgibt. Dann erfolgt die Auslösung der Sicherheitsfunktion, wenn sich eine Person P der Gefahrenstelle nähert.

Bei dem in Figur 7 dargestellten Fall fährt ein fahrerloses Transportsystem F in den Überwachungsbereich 103 ein. Durch die durchgeführte Objektklassifikation wird das fahrerlose Transportsystem F als nicht gefahrbringend eingestuft, so dass es bis zur Anlage 101 vorfahren kann, beispielsweise um Güter abzuladen oder aufzunehmen, ohne dass hierbei eine Sicherheitsfunktion ausgelöst wird. Vielmehr können dann durch nichtsichere Ausgangssignale Steuerungsfunktion ausgelöst werden, die ein automatisches Be- oder Entladen des fahrerlosen Transportsystems F ermöglichen.

### Bezugszeichenliste

- (2): Lichtstrahlen
- (3): Sender
- (4): Empfänger
- (6): Gehäuse
- (7): Empfangsoptik
- (8): Ablenkeinheit
- (9): Winkelspiegel
- (10): Messkopf
- (11): Sockel
- (12): Beleuchtungseinheit
- (13): Bildsensor
- (14): Empfangselement
- (15): Gegenstand
- (100): Überwachungseinrichtung
- (101): Anlage
- (102): Sicherheitssensor
- (103): Überwachungsbereich
- (104): Steuereinheit
- (105): Rechnereinheit
- (106): sicherer Ausgang
- (107): nichtsicherer Ausgang
- D: Drehachse
- F: Fahrerloses Transportsystem
- P: Person

## Patentansprüche

1. Überwachungseinrichtung (100) mit einem Sicherheitssensor (102), mittels dessen ein Überwachungsbereich (103) an einer Anlage (101) überwacht wird, **dadurch gekennzeichnet, dass** mittels des Sicherheitssensors (102) die Bewegungsrichtung und/oder Geschwindigkeit eines in den Überwachungsbereich (103) eindringenden Objekts erfasst werden und abhängig hiervon Ausgangssignale generiert werden, mittels derer die Anlage (101) gesteuert wird.

2. Überwachungseinrichtung (100) nach Anspruch 1, **dadurch gekennzeichnet, dass** für den Sicherheitssensor (102) nur ein Überwachungsbereich (103) konfiguriert ist.

3. Überwachungseinrichtung (100) nach einem der Ansprüche 1 oder 2, **dadurch gekennzeichnet, dass** sichere und/oder nichtsichere Ausgangssignale ausgebbar sind.

4. Überwachungseinrichtung (100) nach Anspruch 3, **dadurch gekennzeichnet, dass** sichere Ausgangssignale mittels sicherer Protokolle und/oder über fehlersichere Ausgangsstrukturen ausgegeben werden.

5. Überwachungseinrichtung (100) nach einem der Ansprüche 2 bis 4, **dadurch gekennzeichnet, dass** die sicheren und nichtsicheren Ausgangssignale konfigurierbar sind.

6. Überwachungseinrichtung (100) nach einem der Ansprüche 2 bis 5, **dadurch gekennzeichnet, dass** mittels der sicheren Ausgangssignale eine Sicherheitsfunktion für die Anlage (101) ausgelöst wird.

7. Überwachungseinrichtung (100) nach einem der Ansprüche 2 bis 6, **dadurch gekennzeichnet, dass** mittels der nichtsicheren Ausgangssignale eine Steuerungsfunktion für die Anlage (101) ausgelöst wird.

8. Überwachungseinrichtung (100) nach einem der Ansprüche 1 bis 7, **dadurch gekennzeichnet, dass** anhand von Sensorsignalen des Sicherheitssensors (102) Bewegungsvektoren von Objekten im Überwachungsbereich (103) bestimmt werden.

9. Überwachungseinrichtung (100) nach einem der Ansprüche 1 bis 8, **dadurch gekennzeichnet, dass** anhand von Sensorsignalen des Sicherheitssensors (102) Bewegungsprofile von Objekten im Überwachungsbereich (103) bestimmt werden.

10. Überwachungseinrichtung (100) nach Anspruch 9, **dadurch gekennzeichnet, dass** anhand von Bewegungsprofilen eine Klassifizierung von Objekten durchgeführt wird.

11. Überwachungseinrichtung (100) nach Anspruch 10, **dadurch gekennzeichnet, dass** anhand der Klassifizierung Personen (P) von anderen Objekten unterschieden werden.

12. Überwachungseinrichtung (100) nach einem der Ansprüche 1 bis 11, **dadurch gekennzeichnet, dass** anhand von mittels Sensorsignalen des Sicherheitssensors (102) bestimmten Konturen, Objektmustern und/oder Objekthelligkeiten von Objekten eine Klassifikation von Objekten durchgeführt wird.

13. Überwachungseinrichtung (100) nach einem der Ansprüche 10 bis 12, **dadurch gekennzeichnet, dass** die Ausgangssignale abhängig von der Klassifikation von Objekten generiert werden.

14. Überwachungseinrichtung (100) nach einem der Ansprüche 1 bis 13, **dadurch gekennzeichnet, dass** die Ausgangssignale abhängig von den Bewegungen eines Objekts relativ zur Position wenigstens einer Gefahrenstelle im Überwachungsbereich (103) generiert werden.

15. Überwachungseinrichtung (100) nach Anspruch 14, **dadurch gekennzeichnet, dass** die Position der Gefahrenstelle konfigurierbar ist.

16. Überwachungseinrichtung (100) nach einem der Ansprüche 1 bis 15, **dadurch gekennzeichnet, dass** die Ausgangssignale an eine die Anlage (101) steuernde Steuereinheit (104) ausgegeben werden.

17. Überwachungseinrichtung (100) nach einem der Ansprüche 1 bis 16, **dadurch gekennzeichnet, dass** die Auswertung von Sensorsignalen in einer im Sicherheitssensor (102) integrierten Auswerteeinheit oder in einer externen Rechnereinheit (105) durchgeführt wird.

18. Überwachungseinrichtung (100) nach einem der Ansprüche 1 bis 17, **dadurch gekennzeichnet, dass** der Sicherheitssensor (102) ein optischer Sensor, ein Radarsensor oder ein Ultraschallsensor ist.

19. Überwachungseinrichtung (100) nach einem der Ansprüche 1 bis 18, **dadurch gekennzeichnet, dass** der Sicherheitssensor (102) ein Flächendistanzsensor oder ein Kamerasensor ist.

20. Verfahren zum Betrieb einer Überwachungseinrichtung (100) mit einem Sicherheitssensor (102), mittels dessen ein Überwachungsbereich (103) an einer Anlage (101) überwacht wird, **dadurch gekennzeichnet, dass** mittels des Sicherheitssensors (102) die Bewegungsrichtung und/oder Geschwindigkeit eines in dem Überwachungsbereich (103) eindringenden Objekts erfasst werden und abhängig hiervon Ausgangssignale generiert werden, mittels derer die Anlage (101) gesteuert wird.
